# EUROPÄISCHE PATENTANMELDUNG

(11) **EP 3 763 467 A1**
(43) Veröffentlichungstag der Anmeldung: **13.01.2021**
(21) Anmeldenummer: 19185765.5
(22) Anmeldetag: 11.07.2019
(51) Int. Cl.: B23B 31/00, B23D 51/02, B25D 17/06, B25D 17/08, B25D 17/20

(54) **STAUBSCHUTZKAPPE MIT SCHWINGUNGSENTKOPPLUNG**

(71) Anmelder: Hilti Aktiengesellschaft, 9494 Schaan (LI)
(72) Erfinder: Knyrim, Maximilian, 89584 Ehingen (DE); Hauptmann, Udo, 86899 Landsberg (DE)
(74) Vertreter: Hilti Aktiengesellschaft Corporate Intellectual Property

(57) **Zusammenfassung**

Werkzeugaufnahmevorrichtung für eine Werkzeugmaschine, insbesondere ein Meißelhammer, enthaltend eine Halteeinrichtung zum Aufnehmen und Halten eines Werkzeugschafts, eine Werkzeugkappe sowie eine Staubschutzeinrichtung zum Verhindern des Eindringens von Staub in die Werkzeugaufnahmevorrichtung.

Die Werkzeugkappe enthält wenigstens ein Aufnahmeelement und die Staubschutzeinrichtung enthält wenigstens ein zu dem Aufnahmeelement korrespondierendes Vorsprungelement enthält, sodass die Werkzeugkappe und Staubschutzeinrichtung formschlüssig miteinander verbindbar sind.

Staubschutzeinrichtung zur Verwendung in einer Werkzeugaufnahmevorrichtung.

## Beschreibung

Die vorliegende Erfindung betrifft eine Werkzeugaufnahmevorrichtung für eine Werkzeugmaschine, insbesondere ein Meißelhammer, enthaltend eine Halteeinrichtung zum Aufnehmen und Halten eines Werkzeugschafts, eine Werkzeugkappe sowie eine Staubschutzeinrichtung zum Verhindern des Eindringens von Staub in die Werkzeugaufnahmevorrichtung.

Des Weiteren betrifft die vorliegende Erfindung eine Staubschutzeinrichtung zur Verwendung in einer Werkzeugaufnahmevorrichtung.

Beim Arbeiten mit Werkzeugmaschinen und insbesondere beim Arbeiten mit einem Meißelhammer an mineralischen Werkstoffen (wie z.B. Beton oder Stein) kann Staub entstehen. Durch kleine Öffnungen, wie z.B. einen Spalt zwischen zueinander angrenzenden Gehäuseteilen, kann derartiger Staub in das Innere einer Werkzeugmaschine gelangen. Der Staub, insbesondere mineralischer Staub, kann eine nicht unerhebliche abrasive Wirkung an beweglichen Bauteilen an Komponenten der Werkzeugmaschine haben. Beschädigungen an einzelnen Komponenten der Werkzeugmaschine oder auch der Ausfall der gesamten Werkzeugmaschine kann die Folge des abrasiven Verschleiß sein. Beim Arbeiten mit Werkzeugmaschinen und insbesondere beim Arbeiten mit Meißelhammern entstehen Vibrationen an den Komponenten und Bauteilen der Werkzeugmaschine. Durch diese unvermeidbaren Vibrationen können sich nahezu alle Komponenten der Werkzeugmaschine zueinander bewegen. Eindringender Staub, der zwischen vibrierende Komponenten gelangt, begünstigt und beschleunigt den Verschleiß der Komponenten. Kleine Komponenten, wie z.B. Rückhalteelemente, leiden besonders unter den Vibrationen und der abrasiven Wirkung des eindringenden Staubs.

Staubschutzeinrichtung sowie Werkzeugaufnahmevorrichtung mit einer Staubschutzeinrichtung der eingangs genannten Art sind grundsätzlich aus dem Stand der Technik bekannt bieten jedoch oftmals nur einen unzureichenden Schutz, d.h. Abdichtmöglichkeiten, gegen eindringenden Staub.

Es ist Aufgabe der vorliegenden Erfindung eine Werkzeugaufnahmevorrichtung sowie eine Staubschutzeinrichtung zur Verwendung in einer Werkzeugaufnahmevorrichtung bereitzustellen, durch die das Eindringen von Staub in das Innere einer Werkzeugaufnahmevorrichtung besser verhindert werden kann.

Die Aufgabe wird gelöst durch den Gegenstand des unabhängigen Anspruchs 1 sowie durch den Gegenstand des unabhängigen Anspruchs 7. Weitere vorteilhafte Ausgestaltungen des Gegenstands des unabhängigen Anspruchs 1 finden sich unter anderem in den Unteransprüchen 2 bis 6.

Die Aufgabe wird dabei gelöst durch eine Werkzeugaufnahmevorrichtung für eine Werkzeugmaschine, insbesondere ein Meißelhammer, enthaltend eine Halteeinrichtung zum Aufnehmen und Halten eines Werkzeugschafts, eine Werkzeugkappe sowie eine Staubschutzeinrichtung zum Verhindern des Eindringens von Staub in die Werkzeugaufnahmevorrichtung.

Erfindungsgemäß enthält die Werkzeugkappe wenigstens ein Aufnahmeelement und die Staubschutzeinrichtung wenigstens ein zu dem Aufnahmeelement korrespondierendes Vorsprungelement, sodass die Werkzeugkappe und Staubschutzeinrichtung formschlüssig miteinander verbindbar sind.

Hierdurch kann auf einfache Art und Weise ein Eindringen von Staub und Schmutz in das Innere der Werkzeugaufnahmevorrichtung verhindert werden. Darüber hinaus ist eine schwingungstechnische Entkoppelung zwischen der Staubschutzeinrichtung und Halteeinrichtung erzeugt, sodass die in Verwendung der Werkzeugmaschine stark vibrationserzeugende Halteeinrichtung nicht direkt mit der Staubschutzeinrichtung verbunden ist und folglich auch nur wenig Vibrationen von der Halteeinrichtung auf die Staubschutzeinrichtung übertragen werden.

Gemäß einer vorteilhaften Ausführungsform der vorliegenden Erfindung kann es möglich sein, dass die Staubschutzeinrichtung wenigstens ein Aufnahmeelement und die Werkzeugkappe wenigstens ein zu dem Aufnahmeelement korrespondierendes Vorsprungelement enthält. Hierdurch kann eine noch bessere formschlüssige Verbindung zwischen der Staubschutzeinrichtung der Werkzeugkappe erzeugt und effektiv Staub aus dem Inneren der Werkzeugaufnahmevorrichtung abgehalten werden.

Gemäß einer vorteilhaften Ausführungsform der vorliegenden Erfindung kann es möglich sein, dass die Staubschutzeinrichtung wenigstens teilweise aus einem elastischen Werkstoff gebildet ist. Hierdurch ist es möglich, dass die Staubschutzeinrichtung wenigstens teilweise elastisch verform werden kann, um die Staubschutzkappe unbeschädigt an der Werkzeugaufnahmevorrichtung zu befestigen bzw. von der Werkzeugaufnahmevorrichtung auch wieder zu entfernen. Darüber hinaus ermöglicht die Verwendung eines elastischen Werkstoffs, dass Vibrationen sowie Schwingungen absorbiert werden.

Gemäß einer vorteilhaften Ausführungsform der vorliegenden Erfindung kann es möglich sein, dass ein radialer Abstand und/oder ein axialer Abstand zwischen der Staubschutzeinrichtung und Halteeinrichtung vorgesehen ist. Hierdurch ist sichergestellt, dass die Staubschutzeinrichtung und die Halteeinrichtung stets voneinander getrennt bzw. entkoppelt sind, sodass keine Vibrationen oder Schwingungen von der Halteeinrichtung auf die Staubschutzeinrichtung übertragen werden.

Gemäß einer vorteilhaften Ausführungsform der vorliegenden Erfindung kann es möglich sein, dass die Staubschutzeinrichtung eine ringförmige Fixierwulst und die Halteeinrichtung eine zu der Fixierwulst korrespondierende Vertiefung enthält zum axialen Halten der Staubschutzeinrichtung auf der Halteeinrichtung. Hierdurch ist die Fixierwulst formschlüssig mit der Halteeinrichtung so verbunden, dass ein zu leichtes Abziehen der Staubschutzeinrichtung von der Halteeinrichtung verhindert werden kann. Darüber hinaus kann, wenn sich Fixierwulst in der Vertiefung befindet, die ordnungsgemäße Positionierung der Staubschutzeinrichtung auf der Halteeinrichtung sichergestellt werden. Die Vertiefung kann auch als um die Halteeinrichtung herumlaufende Nut bezeichnet werden.

Gemäß einer vorteilhaften Ausführungsform der vorliegenden Erfindung kann es möglich sein, dass die Staubschutzeinrichtung ein vorderes und hinteres Ende enthält, wobei an dem hinteren Ende eine um die Halteeinrichtung herum verlaufende kegelstumpfförmige Aussparung vorgesehen ist. Hierdurch kann verhindert werden, dass das hintere Ende der Staubschutzeinrichtung an das Rückhalteelement und/oder an die Halteeinrichtung stößt, wenn Vibrationen auf die Staubschutzeinrichtung einwirken.

Darüber hinaus wird die Aufgabe gelöst durch eine Staubschutzeinrichtung zur Verwendung in einer Werkzeugaufnahmevorrichtung gemäß wenigstens einer vorstehend genannten Ausgestaltung.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: eine schematisch dargestellte Werkzeugmaschine in Form eines Meißelhammers mit einer erfindungsgemäßen Werkzeugaufnahmevorrichtung und einer erfindungsgemäßen Staubschutzeinrichtung;
- Figur 2: eine Schnittdarstellung der erfindungsgemäßen Werkzeugaufnahmevorrichtung gemäß einer ersten Ausführungsform mit der erfindungsgemäßen Staubschutzeinrichtung und einem in die Werkzeugaufnahmevorrichtung eingeführten Werkzeugschaft;
- Figur 3: eine Schnittdarstellung mit Details der erfindungsgemäßen Staubschutzeinrichtung gemäß der ersten Ausführungsform;
- Figur 4: eine Schnittdarstellung der erfindungsgemäßen Werkzeugaufnahmevorrichtung gemäß einer zweiten Ausführungsform mit der erfindungsgemäßen Staubschutzeinrichtung und einem in die Werkzeugaufnahmevorrichtung eingeführten Werkzeugschaft; und
- Figur 5: eine Schnittdarstellung mit Details der erfindungsgemäßen Staubschutzeinrichtung gemäß der zweiten Ausführungsform.

### Ausführungsbeispiele:

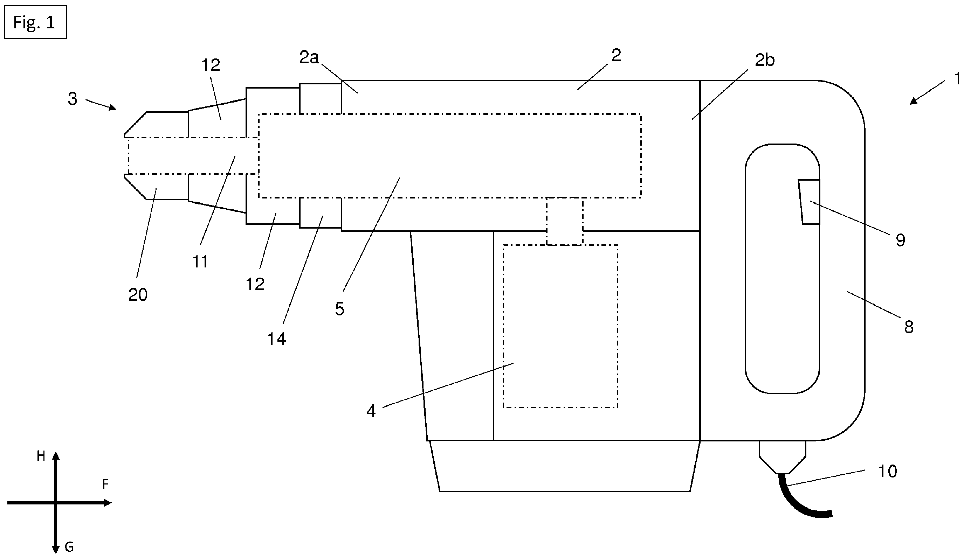

Figur 1 stellt eine Werkzeugmaschine 1 in Ausgestaltung eines Meißelhammers dar. Die Werkzeugmaschine 1 kann alternativ auch in Form eines Bohrhammers, einer Bohrmaschine oder eines Kombihammers ausgestaltet sein. Bei einem Kombihammer handelt es sich um eine Kombination von Bohr- und Meißelhammer. Darüber hinaus kann es sich bei der Werkzeugmaschine auch um eine Säge, insbesondere Säbelsäge handeln.

Die in Figur 1 dargestellte Werkzeugmaschine 1 enthält im Wesentlichen ein Gehäuse 2, eine Werkzeugaufnahmevorrichtung 3, einen Antrieb 4, ein Schlagwerk 5 sowie eine Halteeinrichtung 11. Der Antrieb 4, das Schlagwerk 5 und die Halteeinrichtung 11 sind im Inneren des Gehäuses 2 der Werkzeugmaschine 1 positioniert. Der Antrieb 4 ist in Form eines Elektromotors ausgestaltet und im Inneren des Gehäuses 2 so mit dem Schlagwerk 5 und der Halteeinrichtung 11 verbunden, dass ein durch den Antrieb 4 und das Schlagwerk 5 erzeugte Schlagimpuls auf ein in der Halteeinrichtung 11 befindliches Werkzeug 7 übertragen wird.

Die in Figur 1 gezeigte Werkzeugaufnahmevorrichtung 3 stellt schematisch sowohl eine erste als auch eine zweite Ausführungsform der Werkzeugaufnahmevorrichtung 3 dar.

Das Gehäuse 2 weist ein vorderes Ende 2a und ein hinteres Ende 2b auf. An dem hinteren Ende 2b des Gehäuses 2 ist ein Handgriff 8 mit einem Aktivierungsschalter 9 positioniert. Mit dem Handgriff 8 kann die Werkzeugmaschine 1 von einem Anwender gehalten und geführt werden. Der Aktivierungsschalter 9 dient zum Betreiben bzw. Aktivieren der Werkzeugmaschine 1 und insbesondere des Antriebs 4 sowie des Schlagwerks 5. Der Anwender ist in den Figuren nicht gezeigt.

Des Weiteren ist an dem hinteren Ende 2b des Gehäuses 2 der Werkzeugmaschine 1 ein Netzkabelanschluss 10. Das zu dem Netzkabelanschluss 10 gehörende Netzkabel ist in Figur 1 lediglich angedeutet. Durch den Netzkabelanschluss 10 kann die Werkzeugmaschine 1 mit elektrischer Energie aus einem Netzwerk (z.B. Steckdose) versorgt werden. Alternativ kann die Werkzeugmaschine 1 auch durch einen mit der Werkzeugmaschine 1 verbunden Akkumulator mit elektrischer Energie versorgt werden. Der Akkumulator ist in den Figuren nicht gezeigt.

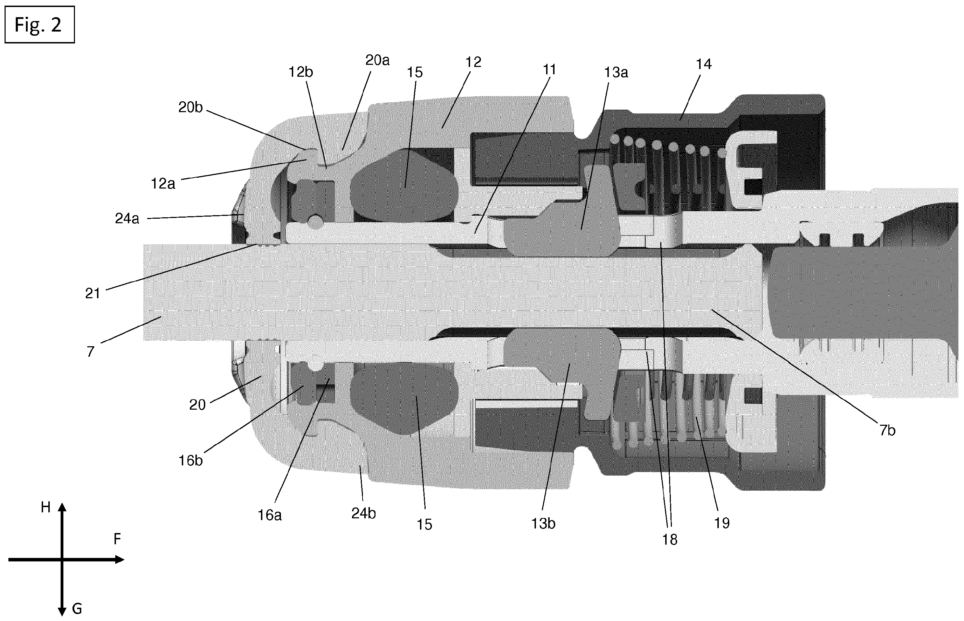

Die Werkzeugaufnahmevorrichtung 3 ist an dem vorderen Ende 2a des Gehäuses 2 der Werkzeugmaschine 1 positioniert. Die Werkzeugaufnahmevorrichtung 3 dient zum Aufnehmen und Halten eines Werkzeugs 7. In der vorliegenden Ausgestaltung der Werkzeugmaschine 1 und der Werkzeugaufnahmevorrichtung 3 ist das Werkzeug 7 in Form eines Meißels ausgestaltet. In Figur 2 ist ein hinteres Ende 7a des als Meißels ausgestalteten Werkzeugs 7 gezeigt. Das hintere Ende des Meißels 7a kann als Schaft, Meißelschaft oder Werkzeugschaft bezeichnet werden.

Die Werkzeugaufnahmevorrichtung 3 enthält im Wesentlichen die Halteeinrichtung 11, eine Werkzeugkappe 12, zwei Verriegelungsklinken 13a, 13b, eine Löseeinrichtung 14, ein Dämpfungselement 15, einen ersten Haltering 16a, einen zweiten Haltering 16b sowie ein Rückhalteelement 17.

Wie in Figur 1 und 2 angedeutet ist die Halteeinrichtung 11 im Wesentlichen als zylindrisches Rohr ausgestaltet, in welches der Werkzeugschaft 7a eingeführt werden kann. Die als zylindrisches Rohr ausgestaltete Halteeinrichtung 11 weist des Weiteren Öffnungen 18 auf, in den die Verriegelungsklinken 13a, 13b positioniert sind. Die Verriegelungsklinken 13a, 13b können auch als Haltebacken bezeichnet werden. Die Verriegelungsklinken 13a, 13b können in einer Halteposition oder Freigabeposition durch die Löseeinrichtung 14 eingestellt werden. Mit Hilfe der durch die Öffnungen 18 der Halteeinrichtung 11 hindurchragenden Verriegelungsklinken 13a, 13b kann der Werkzeugschaft 7a in der Halteeinrichtung 11 gegen ein axiales Herausfallen gesichert werden, wenn sich die Verriegelungsklinken 13a, 13b in der Halteposition befinden (vgl. Figur 2). Die Verriegelungsklinken 13a, 13b liegen dabei nicht an dem Werkzeugschaft 7a an und verklemmen den Werkzeugschaft 7a nicht in der Halteeinrichtung 11. Das Werkzeug 7 kann sich in der Halteposition der Verriegelungsklinken 13a, 13b axial in der Halteeinrichtung 11 bewegen. Wie in Figur 2 gezeigt liegen in der Halteposition die Verriegelungsklinken 13a, 13b nahezu an dem Werkzeugschaft 7a an.

Die Löseeinrichtung 14 ist, wie in Figur 2 angedeutet, als Hülse ausgestaltet und um die Verriegelungsklinken 13a, 13b positioniert. Die als Hülse ausgestaltete Löseeinrichtung 14 kann in Richtung F gegen die Kraft einer Feder 19 von einer ersten Position in eine zweite Position bewegt werden. In der ersten Position bewirkt die Löseeinrichtung 14, dass die Verriegelungsklinken 13a, 13b nahezu an dem in der Halteeinrichtung 11 befindlichen Werkzeugschaft 7a anliegen und das Werkzeug 7 so in der Halteeinrichtung 11 halten. Die Feder 19 drück gegen die Richtung F die Löseeinrichtung 14 n der ersten Position und somit die Verriegelungsklinken 13a, 13b in Richtung des Werkzeugschafts 7a. Wenn die Löseeinrichtung 14 gegen die Federkraft der Feder 19 in Richtung F gedrückt wird, wird keine Kraft mehr von der Löseeinrichtung 14 auf die Verriegelungsklinken 13a, 13b ausgeübt, sodass die Verriegelungsklinken 13a, 13b radial beweglich sind. Mit anderen Worten: die Verriegelungsklinken 13a, 13b können, wenn sich die Löseeinrichtung 14 in der zweiten Position befindet, von der Halteposition in die Freigabeposition bewegt werden. In der Freigabeposition kann der Werkzeugschaft 7a gegen die Richtung F aus der Halteeinrichtung 11 entnommen werden.

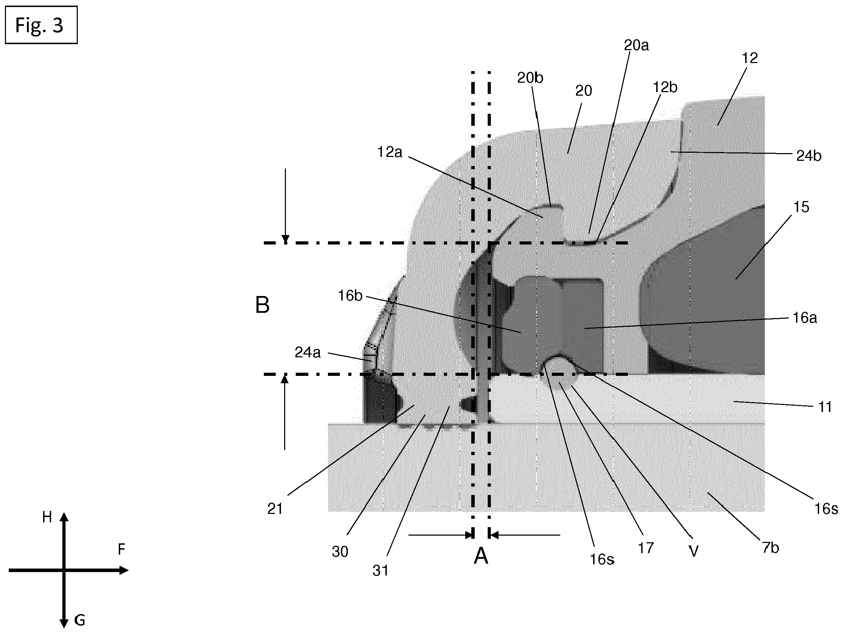

In den Figuren 2 und 3 ist die Werkzeugkappe entsprechend einem ersten Ausführungsbeispiel gezeigt.

Die Werkzeugkappe 12 ist ebenfalls als Hülse ausgestaltet und in Richtung F vor der Löseeinrichtung 14 positioniert. Die Werkzeugkappe 12 ist dabei als Halterung vorgesehen und dient zum Halten der Werkzeugaufnahmevorrichtung 3, wenn beispielsweise die Löseeinrichtung 14 in Richtung F bewegt wird. Darüber hinaus verhindert die Werkzeugkappe 12 auch, dass Staub oder Schmutz in das Innere der Werkzeugaufnahmevorrichtung 3 eindringen kann. Die Werkzeugkappe 12 enthält gemäß dem ersten Ausführungsbeispiel ein Vorsprungelement 12a sowie ein Aufnahmeelement 12b. Wie in den Figuren 2 und 3 erkennbar ist das Vorsprungelement 12a im Wesentlichen als Haken zur Einführung in ein Aufnahmeelement 11b an der Staubschutzeinrichtung 11 ausgestaltet. Wie nachfolgend noch im Detail beschreiben, ist das Aufnahmeelement 12b der Werkzeugkappe 12 ausgestaltet, um ein Vorsprungelement 20a der Staubschutzeinrichtung 20 aufzunehmen. Das Vorsprungelement 12a und Aufnahmeelement 12a der Werkzeugkappe 12 ist Bestandteil einer Schnappverbindung zwischen Werkzeugkappe 12 und Staubschutzeinrichtung 20.

Wie in Figur 2 angedeutet ist das Dämpfungselemente 15 im Wesentlichen ringförmig ausgestaltet und zwischen der Werkzeugkappe 12 sowie der Halteeinrichtung 11 unter Vorspannung positioniert. Das Dämpfungselement 15 besteht aus einem elastischen Werkstoff, z.B. ein Elastomer, und dient unter anderem zum Dämpfen von Vibrationen in der Werkzeugaufnahmevorrichtung 3. Da das Dämpfungselement 15 unter Vorspannung zwischen der Werkzeugkappe 12 und der Halteeinrichtung 11 positioniert ist, übt das Dämpfungselement 15 des Weiteren eine Kraft bzw. ein Druck in axialer Richtung auf benachbarte Bauteile aus. Hierdurch wird eine Spannung bzw. Druck in der Werkzeugaufnahmevorrichtung 3 gegeben, sodass die einzelnen Komponenten bzw. Bauteile der Werkzeugaufnahmevorrichtung 3 aneinandergepasst sind. Wie nachfolgend beschrieben, wirkt das Dämpfungselement 15 mit dem Rückhalteelement 17 zusammen, um eine Vorspannung in die Werkzeugaufnahmevorrichtung 3 zu bringen.

Weiterhin dient das Dämpfungselement 15 um Kraftspitzen bzw. Impulse im Falle eines Leerschlags während der Verwendung der als Meißelhammer ausgestalteten Werkzeugmaschine 1 abzudämpfen.

Des Weiteren ist, wie in Figur 2 gezeigt, der Haltering in Richtung F vor der Werkzeugkappe 12 und um die Halteeinrichtung 11 positioniert. Der erste und zweite Haltering 16a, 16b ist im Wesentlichen ringförmig ausgestaltet und dient im Zusammenspiel mit dem Rückhalteelement 17 zum Fixieren der Werkzeugkappe 12 auf der Halteeinrichtung 11. Wie in Figur 3 gezeigt, ist das Rückhalteelement 17 zwischen dem ersten und zweiten Haltering 16a, 16b positioniert. Sowohl der erste als auch zweite Haltering 16a, 16b weist eine sektorförmige Aussparung 16s auf, wodurch eine konkave Außenfläche entsteht. Die Form und Position dieser Aussparung 16s ist dabei so gewählt, dass das Rückhalteelement 17 an dem bzw. in den ersten und zweiten Haltering 16a, 16b eingepasst ist.

Das Rückhalteelement 17 ist, wie in Figur 2 bis 5 gezeigt, als Sprengring ausgestaltet und in Richtung F zwischen dem ersten und zweiten Haltering 16a, 16b positioniert. Das als Sprengring ausgestaltete Rückhalteelement 17 dient zum Halten bzw. Fixieren des ersten und zweiten Halterings 16a, 16b sowie der Werkzeugkappe 12 auf der Halteeinrichtung 11. Die Halteeinrichtung 11 weist an der Höhe bzw. an der Stelle des Sprengrings 17 eine entsprechende Vertiefung V in Form einer Nut auf. Der Sprengring 17 liegt in der Nut V.

In Figur 2 und 3 ist eine Werkzeugaufnahmevorrichtung 3 entsprechend einer ersten Ausführungsform dargestellt. Entsprechend der ersten Ausführungsform weist sowohl die Staubschutzeinrichtung 20 als auch die Werkzeugkappe 12 spezielle Ausgestaltungen auf, die nachfolgend beschrieben sind.

Die Staubschutzeinrichtung 20 dient zum Verhindern des Eindringens von Staub in die Werkzeugaufnahmevorrichtung 3 und ist im Wesentlichen als kegelstumpfförmige Kappe mit einer zentralen Durchbohrung 21 ausgestaltet. Die Staubschutzeinrichtung 20 besteht dabei wenigstens teilweise aus einem elastischen Material, das auch als Elastomer bezeichnet werden kann.

Darüber hinaus enthält die Staubschutzeinrichtung 20 im Wesentlichen ein vorderes Ende 24a, ein hinteres Ende 24b, ein Staubabstreifelement 22, ein Vorsprungelement 20a sowie ein Aufnahmeelement 20b.

Das Staubabstreifelement 22 ist an dem vorderen Ende 24a der Staubschutzeinrichtung 20 bzw. an der zentralen Durchbohrung 21 positioniert und dient zum Verhindern des Eindringens von Staub zwischen dem Werkzeugschaft 7a und der Staubschutzeinrichtung 20. Das Staubabstreifelement 22 weist hierzu ein Kragenelement 30 mit einer umlaufenden Taille 31 auf. Das Kragenelement 30 liegt zum Abdichten an dem Werkzeugschaft 7a an. Durch die Taille 71 ist das Kragenelement 30 in axialer Richtung bewegbar, sodass auf das Kragenelement 30 wirkende Vibrationen ausgeglichen werden können und das Kragenelement 30 nicht von dem Werkzeugschaft 7a in radialer Richtung loslöst bzw. abhebt.

Wie in den Figuren 2 und 3 erkennbar ist das Vorsprungelement 20a der Staubschutzeinrichtung 20 im Wesentlichen als Haken zur Einführung in das Aufnahmeelement 12b an der Werkzeugkappe 12 ausgestaltet. Das Aufnahmeelement 20b der Staubschutzeinrichtung 20 ist ausgestaltet, um das Vorsprungelement 12a der Werkzeugkappe 12 aufzunehmen. Das Vorsprungelement 20a und Aufnahmeelement 20b der Staubschutzeinrichtung 20 korrespondiert entsprechend zu dem Aufnahmeelement 12b und Vorsprungelement 12a der Werkzeugkappe 12 und ist damit Bestandteil der Schnappverbindung zwischen Werkzeugkappe 12 und Staubschutzeinrichtung 20.

Durch die entsprechenden Vorsprungelemente 12a. 20a und Aufnahmeelemente 12b, 20b der Staubschutzeinrichtung 20 sowie der Werkzeugkappe 12 kann eine formschlüssige Verbindung zwischen Staubschutzeinrichtung 20 und Werkzeugkappe 12 erzeugt werden. Hierdurch wird ein großflächiger Abdichtbereich zwischen Staubschutzeinrichtung 20 und Werkzeugkappe 12 geschaffen gegen das Eindringen von Staub in das Innere der Werkzeugaufnahmevorrichtung 3. Dadurch, dass die Staubschutzeinrichtung 20 wenigstens teilweise aus einem elastischen Material besteht, kann mindestens der Bereich an bzw. um das Vorsprungelement 20a der Staubschutzeinrichtung 20 radial so verformt werden, um die Schnappverbindung zwischen Staubschutzeinrichtung 20 und Werkzeugkappe 12 zu lösen und die Staubschutzeinrichtung 20 von der Werkzeugaufnahmevorrichtung 3 zu entnehmen.

Bei der Werkzeugaufnahmevorrichtung 3 gemäß der ersten Ausführungsform ist die Staubschutzeinrichtung 20 so mit der Werkzeugkappe 12 verbunden, dass ein axialer Abstand A sowie ein radialer Abstand B vorgesehen ist. Wie in Figur 3 zu sehen ist, erstreckt sich der axiale Abstand A von der Stirnseite der Halteeinrichtung 11 zu dem Kragenelement 30 der Staubschutzeinrichtung 20. Der Abstand B erstreckt sich dagegen von einer Oberflächenseite der Halteeinrichtung 11 zu einer inneren Mantelfläche der Staubschutzeinrichtung 20. Durch den Abstand A und B ist die Staubschutzeinrichtung 20 in einem montierten Zustand von der Halteinrichtung 11 entkoppelt, sodass keine Schwingungen oder Vibrationen von der Halteeinrichtung 11 auf die Staubschutzeinrichtung 20 übertragen werden.

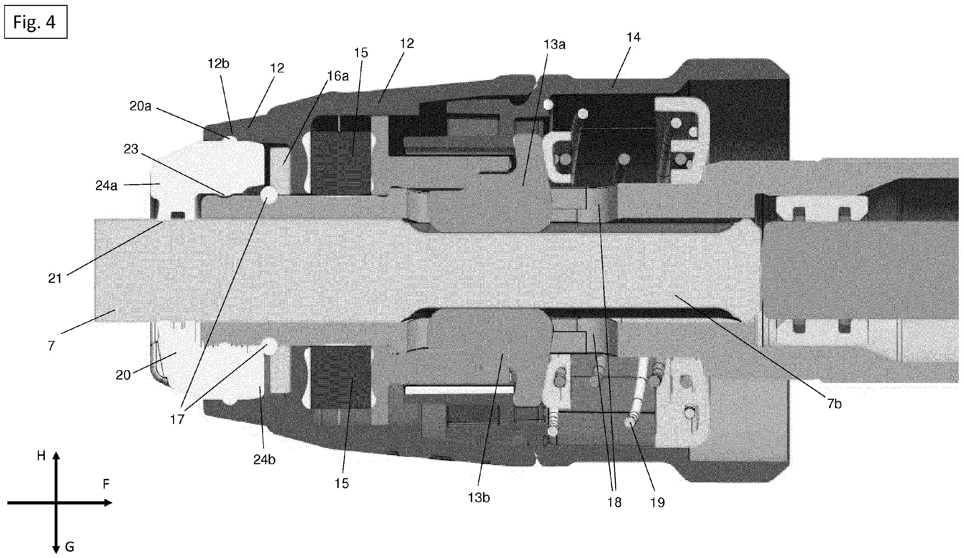

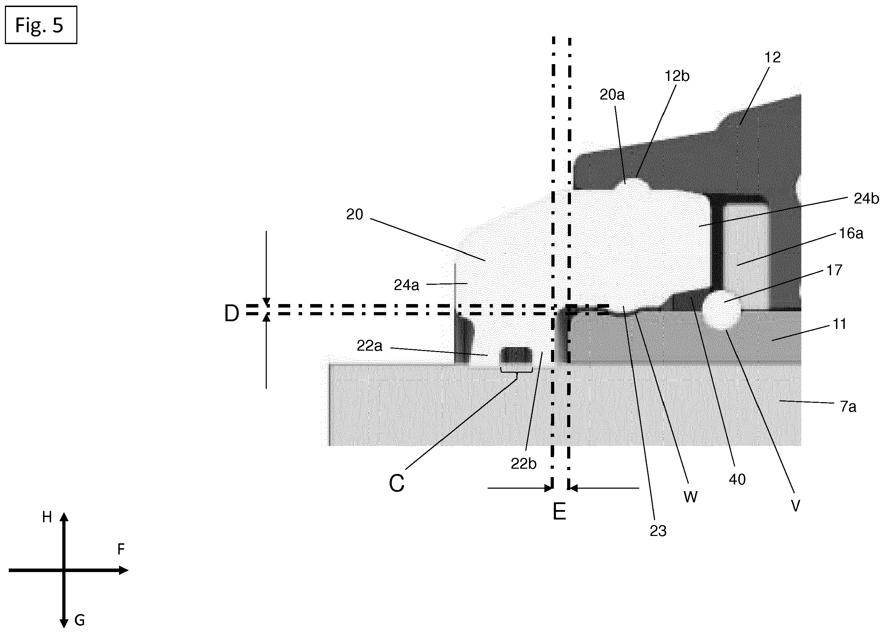

In Figur 4 und 5 ist eine Werkzeugaufnahmevorrichtung 3 entsprechend einer zweiten Ausführungsform dargestellt. Entsprechend der zweiten Ausführungsform weist sowohl die Staubschutzeinrichtung 20 als auch die Werkzeugkappe 12 spezielle Ausgestaltungen auf, die nachfolgend beschrieben sind.

Die Staubschutzeinrichtung 20 dient wiederum zum Verhindern des Eindringens von Staub in die Werkzeugaufnahmevorrichtung 3 und ist ebenfalls im Wesentlichen als kegelstumpfförmige Kappe mit einer zentralen Durchbohrung 21 ausgestaltet. Die Staubschutzeinrichtung 20 besteht dabei wenigstens teilweise aus einem elastischen Material, das auch als Elastomer bezeichnet werden kann.

Im Gegensatz zu der Staubschutzeinrichtung 20 gemäß der ersten Ausführungsform enthält die Staubschutzeinrichtung 20 gemäß der zweiten Ausführungsform im Wesentlichen ein vorderes Ende 24a, ein hinteres Ende 24b, ein erstes Staubabstreifelement 22a, ein zweites Staubabstreifelement 22b, eine Fixierwulst 23 sowie ein Vorsprungelement 20a.

Wie in Figur 4 und 5 zu erkennen ist, erstreckt sich das erste und zweite Staubabstreifelement 22a, 22b radial um die zentrale Durchbohrung 21 der Staubschutzeinrichtung 20 und befinden sich in der Nähe des ersten Endes 24a der Staubschutzeinrichtung 20. Das erste und zweite Staubabstreifelement 22a, 22b sind damit quasi als Kragenelemente 30 ausgestaltet und liegen mit dem jeweils freien Ende an dem Werkzeugschaft 7a an. Das erste und zweite Staubabstreifelement 22a, 22b dient zum Abdichten gegen eindringenden Staub zwischen dem Werkzeugschaft 7a und der Staubschutzeinrichtung 20. Wie in Figur 5 ersichtlich, ist das ersten und zweite Staubabstreifelement 22a, 22b in einem Abstand C zueinander angeordnet. Der Abstand C zwischen dem ersten und zweiten Staubabstreifelement 22a, 22b ist erforderlich, dass sich das erste und zweite Staubabstreifelement 22a, 22b nicht gegenseitig berühren, wenn Vibrationen oder Schwingungen auf das erste und/oder zweite Staubabstreifelement 22a, 22b einwirken.

Das Vorsprungelement 20a der Staubschutzeinrichtung 20 ist gemäß der zweiten Ausführungsform in Form einer Erhöhung ausgestaltet, welche radial um die Außenfläche der Staubschutzeinrichtung 20 herum verläuft. Die Werkzeugkappe 12 weist ein Aufnahmeelement 12b in Form einer Vertiefung zur Aufnahme des Vorsprungelements 20a der Staubschutzeinrichtung 20 auf. Wenn sich die Staubschutzeinrichtung 20 in einem an der Werkzeugaufnahmevorrichtung 3 montierten Zustand befindet, ist das Vorsprungelement 20a der Staubschutzeinrichtung 20 in das Aufnahmeelement 12b der Werkzeugkappe 12 positioniert, sodass eine formschlüssige Verbindung zwischen der Staubschutzeinrichtung 20 und der Werkzeugkappe 12 entsteht.

Die Fixierwulst 23 ist, wie in Figur 5 ersichtlich, an der Innenmantelfläche der Staubschutzeinrichtung 20 radial um die zentrale Durchbohrung 21 herum positioniert. An der Halteeinrichtung 11 ist eine zu der Fixierwulst 23 korrespondierende Vertiefung W in Form einer um die Halteeinrichtung 11 herum verlaufende Nut vorgesehen. Wenn sich die Staubschutzeinrichtung 20 in einem montierten Zustand an der Werkzeugaufnahmevorrichtung 3 befindet, ist die Fixierwulst 23 in ein radialen Abstand D auf Höhe der Vertiefung W positioniert. Der Abstand D dient dazu, dass sich die Fixierwulst 23 und die Halteeinrichtung 11 nicht miteinander berühren, wenn Vibrationen während des Gebrauchs der Werkzeugmaschine 1 auf die Halteeinrichtung 11 einwirken. Hierdurch werden die Vibrationen von der Halteeinrichtung 11 nicht auf die Staubschutzeinrichtung 20 übertragen.

Des Weiteren weist die Staubschutzeinrichtung 20 an dem hinteren Ende 24b eine um die Halteeinrichtung 11 herum verlaufende kegelstumpfförmige Aussparung 40 auf. Die Aussparung 40 verhindert, dass das hintere Ende 24b der Staubschutzeinrichtung mit Bauteilen der Werkzeugaufnahmevorrichtung 3 in Berührung kommt, wenn Vibrationen auf die Werkzeugaufnahmevorrichtung 3 einwirken.

Durch die Verwendung eines elastischen Materials für die Staubschutzeinrichtung 20 und den Abstand D kann die Staubschutzeinrichtung 20 von der Werkzeugaufnahmevorrichtung 3 entfernt werden.

### Bezugszeichenliste

- 1: Werkzeugmaschine
- 2: Gehäuse
- 2a: vorderes Ende des Gehäuses
- 2b: hinteres Ende des Gehäuses
- 3: Werkzeugaufnahmevorrichtung
- 4: Antrieb
- 5: Schlagwerk
- 7: Werkzeug
- 7a: hinteres Ende des Werkzeugs; Werkzeugschaft
- 8: Handgriff
- 9: Aktivierungsschalter
- 10: Netzkabelanschluss
- 11: Halteeinrichtung
- 12: Werkzeugkappe
- 12a: Vorsprungelement der Werkzeugkappe
- 12b: Aufnahmeelement der Werkzeugkappe
- 13a: Verriegelungsklinke
- 13b: Verriegelungsklinke
- 14: Löseeinrichtung
- 15: Dämpfungselement
- 16a: erster Haltering
- 16b: zweiter Haltering
- 16s: sektorförmige Aussparung am Haltering
- 17: Rückhalteelement
- 18: Öffnungen an Halteeinrichtung
- 19: Feder
- 20: Staubschutzeinrichtung
- 20a: Vorsprungelement der Staubschutzeinrichtung
- 20b: Aufnahmeelement der Staubschutzeinrichtung
- 21: zentrale Durchbohrung an der Staubschutzeinrichtung
- 22: Staubabstreifelement
- 22a: erstes Staubabstreifelement
- 22b: zweites Staubabstreifelement
- 23: Fixierwulst
- 24a: vorderes Ende der Staubschutzeinrichtung
- 24b: hinteres Ende der Staubschutzeinrichtung
- 30: Kragenelement
- 31: Taille
- 40: Aussparung an Staubschutzeinrichtung
- A: axialer Abstand zwischen Staubschutzeinrichtung und Halteeinrichtung
- B: radialer Abstand zwischen Staubschutzeinrichtung und Halteeinrichtung
- C: axialer Abstand zwischen Staubabstreifelementen
- D: radialer Abstand zwischen Staubschutzeinrichtung und Halteeinrichtung
- E: axialer Abstand zwischen Staubschutzeinrichtung und Halteeinrichtung

## Patentansprüche

1. Werkzeugaufnahmevorrichtung (3) für eine Werkzeugmaschine (1), insbesondere ein Meißelhammer, enthaltend eine Halteeinrichtung (11) zum Aufnehmen und Halten eines Werkzeugschafts (7a), eine Werkzeugkappe (12) sowie eine Staubschutzeinrichtung (20) zum Verhindern des Eindringens von Staub in die Werkzeugaufnahmevorrichtung (3),
**dadurch gekennzeichnet, dass** die Werkzeugkappe (12) wenigstens ein Aufnahmeelement (12b) und die Staubschutzeinrichtung (20) wenigstens ein zu dem Aufnahmeelement (12b) korrespondierendes Vorsprungelement (20a) enthält, sodass die Werkzeugkappe (12) und Staubschutzeinrichtung (20) formschlüssig miteinander verbindbar sind.

2. Werkzeugaufnahmevorrichtung (3) nach Anspruch 1,
**dadurch gekennzeichnet, dass** die Staubschutzeinrichtung (20) wenigstens ein Aufnahmeelement (20b) und die Werkzeugkappe (12) wenigstens ein zu dem Aufnahmeelement (20b) korrespondierendes Vorsprungelement (12a) enthält.

3. Werkzeugaufnahmevorrichtung (3) nach Anspruch 1 oder 2,
**dadurch gekennzeichnet, dass** die Staubschutzeinrichtung (20) wenigstens teilweise aus einem elastischen Werkstoff gebildet ist.

4. Werkzeugaufnahmevorrichtung (3) nach wenigstens einem der Ansprüche 1 bis 3,
**dadurch gekennzeichnet, dass** ein radialer Abstand (B, D) und/oder ein axialer Abstand (A, E) zwischen der Staubschutzeinrichtung (20) und Halteeinrichtung (11) vorgesehen ist.

5. Werkzeugaufnahmevorrichtung (3) nach wenigstens einem der Ansprüche 1 bis 4,
**dadurch gekennzeichnet, dass** die Staubschutzeinrichtung (20) eine ringförmige Fixierwulst (23) und die Halteeinrichtung (11) eine zu der Fixierwulst (23) korrespondierende Vertiefung (W) enthält zum axialen Halten der Staubschutzeinrichtung (20) auf der Halteeinrichtung (11).

6. Werkzeugaufnahmevorrichtung (3) nach wenigstens einem der Ansprüche 1 bis 5,
**dadurch gekennzeichnet, dass** die Staubschutzeinrichtung (20) ein vorderes und hinteres Ende (24a, 24b) enthält, wobei an dem hinteren Ende (24a) wenigstens ein Staubabstreifelement (22, 22a, 22b) und an dem hinteren Ende (24b) eine um die Halteeinrichtung (11) herum verlaufende kegelstumpfförmige Aussparung (40) vorgesehen ist.

7. Staubschutzeinrichtung zur Verwendung in einer Werkzeugaufnahmevorrichtung nach wenigstens einem der Ansprüche 1 bis 6.
